# EUROPÄISCHE PATENTANMELDUNG

(11) **EP 4 656 271 A1**
(43) Veröffentlichungstag der Anmeldung: **03.12.2025**
(21) Anmeldenummer: 24020174.9
(22) Anmeldetag: 28.05.2024
(51) Int. Cl.: B01D 51/10, B01D 53/14

(54) **VERFAHREN UND ANLAGE ZUR BEREITSTELLUNG EINER KOHLENDIOXIDFRAKTION**

(71) Anmelder: Linde GmbH, 82049 Pullach (DE)
(72) Erfinder: Gonzales, Laura, 82049 Pullach (DE); Richter, Torsten, 82049 Pullach (DE); Stoffregen, Torsten, 82049 Pullach (DE); Voloshchuk, Yury, 82049 Pullach (DE)
(74) Vertreter: Grundner, Sebastian

(57) **Zusammenfassung**

Es wird ein Verfahren zur Bereitstellung einer Kohlendioxidfraktion unter Verwendung eines Kohlendioxid enthaltenden, gasförmigen Einsatzgemischs (1) vorgeschlagen, das das absorptive Behandeln des Einsatzgemischs (1) oder eines Teils hiervon unter Erhalt eines mit Kohlendioxid beladenen Absorptionsmittels (7) und eines gegenüber dem Einsatzgemisch an Kohlendioxid abgereicherten Restgemischs (12) und das regenerative Behandeln des beladenen Absorptionsmittels (7) oder eines Teils hiervon unter Erhalt eines regenerierten Absorptionsmittels (8) und der Kohlendioxidfraktion oder einer Vorläuferfraktion (16) hiervon umfasst, wobei das Verfahren die Verwendung einer ersten Gruppe von Wärmeübertragern (126, 128, 130, 133), die unter Verwendung eines ersten Kühlkreislaufs (310) betrieben werden, und einer zweiten Gruppe von Wärmeübertragern (141a, 142, 148a, 148b), die unter Verwendung eines zweiten Kühlkreislaufs (320) betrieben werden, umfasst, wobei der erste Kühlkreislauf (310) auf einem ersten Vorlauftemperaturniveau betrieben wird und der zweite Kühlkreislauf (320) auf einem zweiten Vorlauftemperaturniveau, das unterhalb des ersten Vorlauftemperaturniveaus liegt betrieben wird, und wobei in den ersten Kühlkreislauf (310) ein Wärmepumpenkreislauf (400, 500) eingebunden ist, mittels dessen Wärme auf ein Wärmeexportmedium übertragen wird. Eine entsprechende Anlage (100, 200) wird ebenfalls vorgeschlagen.

## Beschreibung

### Gebiet

Die Erfindung betrifft ein Verfahren zur Bereitstellung einer Kohlendioxidfraktion und eine entsprechende Anlage.

### Hintergrund

Die Rückgewinnung von Kohlendioxid aus Rauch- oder Prozessgasen und dessen Lagerung (Sequestrierung) oder Verwendung (engl. Carbon (Dioxide) Capture and Storage, CCS bzw. Carbon (Dioxide) Capture and Utilization, CCU) gewinnt zunehmend an Bedeutung. Zur Abscheidung von Kohlendioxid aus Rauch- und/oder Prozessgasen können bekanntermaßen Waschmittel verwendet werden, die Amine, Pottasche, Aminosäuren und dergleichen aufweisen. Zur Regeneration entsprechender Waschmittel ist thermische Energie in nicht unerheblichen Mengen erforderlich.

Entsprechende thermische Energie kann in einem zugrunde liegenden Verbrennungsprozess generiert werden wie z.B. in Kraftwerken, Anlagen zur thermischen Verwertung von Feststoffen und dergleichen. Zum Teil fehlt diese thermische Energie dann aber auch für die Erfüllung von anderen Anforderungen, wie z.B. die Bereitstellung von Wärme für Fern- und Nahwärmenetze (eine typische Anwendung bei Müllverbrennungsanlagen). Bei anderen zugrundeliegenden Prozessen, beispielsweise bei der Zementherstellung, steht keine ausreichende Wärme (thermische Energie) für die Regenerierung zur Verfügung, so dass diese zusätzlich bereitgestellt werden muss.

Es besteht der Bedarf nach Verbesserungen bei entsprechenden Verfahren und Anlagen, die die erläuterten Probleme adressieren.

### Übersicht

Vor diesem Hintergrund werden ein Verfahren zur Bereitstellung einer Kohlendioxidfraktion und eine entsprechende Anlage mit den Merkmalen der unabhängigen Patentansprüche vorgeschlagen. Ausgestaltungen sind Gegenstand der abhängigen Patentansprüche und der nachfolgenden Beschreibung.

Das vorgeschlagene Verfahren dient zur Bereitstellung einer Kohlendioxidfraktion unter Verwendung eines Kohlendioxid enthaltenden, gasförmigen Einsatzgemischs. Das vorgeschlagene Verfahren umfasst das absorptive Behandeln des Einsatzgemischs oder eines Teils hiervon unter Erhalt eines mit Kohlendioxid beladenen Absorptionsmittels und eines gegenüber dem Einsatzgemisch an Kohlendioxid abgereicherten Restgemischs, wobei insbesondere ein aminhaltiges Absorptionsmittel bekannter Art und eine entsprechende Absorptionskolonne zum Einsatz kommt. Ferner ist ein regeneratives Behandeln des beladenen Absorptionsmittels oder eines Teils hiervon unter Erhalt eines regenerierten Absorptionsmittels und der Kohlendioxidfraktion oder einer Vorläuferfraktion hiervon vorgesehen, das ebenfalls in an sich bekannter Weise, d.h. durch Austreiben des Kohlendioxid mittels thermischer Energie unter Verwendung einer entsprechenden Kolonne, erfolgt.

Das vorgeschlagene Verfahren umfasst die Verwendung einer ersten Gruppe von Wärmeübertragern, die unter Verwendung eines ersten Kühlkreislaufs betrieben werden, und einer zweiten Gruppe von Wärmeübertragern, die unter Verwendung eines zweiten Kühlkreislaufs betrieben werden, wobei der erste Kühlkreislauf auf einem ersten Vorlauftemperaturniveau betrieben wird und der zweite Kühlkreislauf auf einem zweiten Vorlauftemperaturniveau, das unterhalb des ersten Vorlauftemperaturniveaus liegt, betrieben wird, und wobei in den ersten Kühlkreislauf ein Wärmepumpenkreislauf eingebunden ist, mittels dessen Wärme auf ein Wärmeexportmedium übertragen wird. Der erste und/oder zweite Kühlkreislauf können insbesondere mit ungefährlichen wässrigen Kühlmitteln, beispielsweise unter Verwendung von Wasser oder eines Wasser/Glykol-Gemischs, betrieben werden.

Während im Stand der Technik überschüssige Wärme im Prozess der Kohlendioxidabscheidung und ggf. Kohlendioxidverflüssigung dem Prozess durch den Einsatz von Kühlwasser entzogen wird, was praktisch zur Verschwendung von Wärmeenergie führt, arbeitet das hier vorgeschlagene Verfahren sehr viel effizienter und energiesparender. Das Hauptproblem bei der Nutzung von Wärmequellen der genannten Art sind deren relativ niedrige Temperaturniveaus, die die Wiederverwendung der Abwärme wirtschaftlich unattraktiv machen.

Eine Wärmerückgewinnung mit einer Wärmepumpe kann grundsätzlich auch in konventionellen Verfahren erfolgen. Eine Wärmepumpe hat einen möglichst hohen Wirkungsgrad, wenn die Temperaturdifferenz zwischen Wärmequelle und Wärmesenke möglichst gering ist. Ziel ist es daher, die Temperatur der Wärmequelle möglichst hoch zu erhalten, da die Temperaturen der Wärmesenke meist prozessbedingt oder anwendungsbedingt feststehen. Typische Temperaturen für die Wärmesenke sind für die Regeneration des Waschmittels (hier als "regeneratives Behandeln" bezeichnet) von ca. 120 bis 150° und die Bereitstellung von Wärme für ein Fern- bzw. Nahwärmenetz von ca. 70 bis 130°C.

Die Wärmequellen sind in hier betrachteten Verfahren örtlich verteilt und werden normalerweise durch Kühlwasser, Meerwasser, Sekundärkreislaufwasser oder Luftkühler gekühlt, bei möglichst minimalen Kühlbedingungen, d.h. geringen Vorlauftemperaturen. Als Arbeitsmittel für die Wärmepumpe werden für diesen Anwendungsbereich konventionell Kohlenwasserstoffe, Kältemittelgemische oder auch Ammoniak verwendet. Diese Stoffe haben ein bestimmtes Gefährdungspotential (giftig, brennbar) und die weite örtliche Verteilung innerhalb der Anlage, um alle gewünschten Wärmeübertrager zu erreichen, sollte vermieden werden. Gleichzeitig soll die Temperatur der Wärmequelle so hoch wie möglich gehalten werden.

Das hier vorgeschlagene Verfahren und seine Ausgestaltungen lösen diese Probleme durch die Bereitstellung eines separaten Kühlkreislaufs mit erhöhter Umlauftemperatur, des erwähnten "ersten Kühlkreislauf" mit einem ungiftigen Medium, der die thermische Energie der zu integrierenden Wärmequellen bei maximal möglicher Umlauftemperatur sammelt und an eine Wärmepumpe abgibt.

Insbesondere umfasst die erste Gruppe von Wärmeübertragern einen oder mehrere Absorptionsmittelwärmeübertrager, der oder die zum Kühlen eines Stroms des regenerierten Absorptionsmittels verwendet wird oder werden, und/oder einen Waschwasserwärmeübertrager, der zum Kühlen von Waschwasser, das in bei dem absorptiven Behandeln verwendet wird, umfasst. Auch ein Kopfkondensator einer für das regenerative Behandeln verwendeten Regenerationskolonne kann Teil der ersten Gruppe von Wärmeübertragern sein. Diese Wärmeübertrager sind räumlich nahe beieinander angeordnet, und benötigen keine tiefen Vorlauftemperaturen. Sie können daher in den vorgeschlagenen separaten Kühlkreislauf "ausgelagert" werden.

In hier vorgeschlagenen Ausgestaltungen wird mittels des regenerativen Behandelns die Vorläuferfraktion der Kohlendioxidfraktion gebildet, wobei die Vorläuferfraktion oder ein Teil hiervon einer Aufbereitung zu der Kohlendioxidfraktion unterworfen wird, wobei die Aufbereitung eine Verdichtung, Verflüssigung und Rektifikation umfasst und unter Verwendung von Wärmeübertragern durchgeführt wird, die Teil der zweiten Gruppe von Wärmeübertragern sind. Diese Wärmeübertrager können insbesondere mit im Wesentlichen konventionellen Vorlauftemperaturen betrieben werden.

Genauer kann die Verflüssigung und Rektifikation unter Verwendung einer Kältemitteleinheit bzw. eines Kälteaggregats durchgeführt werden, die bzw. das unter Verwendung von Wärmeübertragern betrieben wird, die Teil der zweiten Gruppe von Wärmeübertragern sind. Die Kältemitteleinheit kann beispielsweise Ammoniak, Kohlendioxid, ein bekanntes C3-Kältemittel (Propan, Propylen) oder entsprechende Gemische bereitstellen bzw. rückverdichten und rückkühlen. Hierzu sind besonders tiefe Vorlauftemperaturen vorteilhaft.

Ferner kann die Verdichtung unter Verwendung eines Kohlendioxidverdichters mit einem oder mehreren Zwischenkühlern und/oder Nachkühlern durchgeführt werden, die Teil der zweiten Gruppe von Wärmeübertragern sind. Auch für derartige Kühlaufgaben ist eine tiefe Vorlauftemperatur vorteilhaft, da hierdurch die Effizienz der Verdichtung deutlich erhöht wird.

In hier vorgeschlagenen Ausgestaltungen kann das zweite Vorlauftemperaturniveau, insbesondere in Abhängigkeit von der jeweiligen Außentemperatur am Standort der Anlage, bei 10 bis 40 °C oder 25 bis 35 °C, beispielsweise ca. 30 °C, liegen, und das das erste Vorlauftemperaturniveau kann insbesondere bei 35 bis 45 °C, beispielsweise ca. 40 °C, liegen. Entsprechende Temperaturbereiche haben sich als besonders vorteilhaft erwiesen.

In bestimmten, hier vorgeschlagenen Ausgestaltungen wird der Wärmepumpenkreislauf unter Verwendung eines Wärmeübertragers betrieben, der ein in dem Wärmepumpenkreislauf verdichtetes und kondensiertes Arbeitsmedium unterkühlt und ein in dem Wärmepumpenkreislauf entspanntes und verdampftes Arbeitsmedium überhitzt. Auf diese Weise kann, wie weiter unten erläutert, die Leistungszahl einer entsprechenden Anordnung deutlich verbessert werden.

In den Wärmepumpenkreislauf kann insbesondere ein Kopfkondensator einer für das regenerative Behandeln verwendeten Regenerationskolonne eingebunden sein, und zwar direkt, d.h. nicht unter Einbindung in den ersten Kühlkreislauf. Der Kopfkondensator kann dabei insbesondere direkt mit dem Wärmeexportmedium, wie beispielsweise Fernwärmewasser oder Niederdruckdampf, durchströmt werden.

In Ausgestaltungen des hier vorgeschlagenen Verfahrens kann der erste Kühlkreislauf mit glykolhaltigem Kühlwasser betrieben werden, welches in einer entsprechenden Anlage deutlich unkritischer ist als ein konventionellerweise breit in der Anlage verteiltes Arbeitsmedium einer Wärmepumpe.

Das Einsatzgemisch kann insbesondere ein Rauchgas sein, das auch einem Kühlschritt im direkten Kontakt mit einem Kühlmittel unterworfen werden kann. Das Kühlmittel kann ein Waschwasser mit oder ohne Laugezudosierung sein, das unter Verwendung eines Wärmeübertragers gekühlt wird, der Teil der ersten Gruppe von Wärmeübertragern oder der zweiten Gruppe von Wärmeübertragern ist. Das Wärmeexportmedium kann Fernwärmewasser sein, und das hier vorgeschlagene Verfahren kann daher die Energie der genannten Wärmequellen in vorteilhafter Weise nutzen.

Die vorgeschlagene Anlage zur Bereitstellung einer Kohlendioxidfraktion unter Verwendung eines Kohlendioxid enthaltenden, gasförmigen Einsatzgemischs ist zum absorptiven Behandeln des Einsatzgemischs oder eines Teils hiervon unter Erhalt eines mit Kohlendioxid beladenen Absorptionsmittels und eines gegenüber dem Einsatzgemisch an Kohlendioxid abgereicherten Restgemischs, und zum regenerativen Behandeln des beladenen Absorptionsmittels oder eines Teils hiervon unter Erhalt eines regenerierten Absorptionsmittels und der Kohlendioxidfraktion oder einer Vorläuferfraktion hiervon eingerichtet.

Die vorgeschlagene Anlage umfasst eine erste Gruppe von Wärmeübertragern, die zum Betrieb unter Verwendung eines ersten Kühlkreislaufs eingerichtet sind, und eine zweite Gruppe von Wärmeübertragern, die zum Betrieb unter Verwendung eines zweiten Kühlkreislaufs eingerichtet sind, wobei der erste Kühlkreislauf für einen Betrieb auf einem ersten Vorlauftemperaturniveau eingerichtet ist und der zweite Kühlkreislauf auf einem zweiten Vorlauftemperaturniveau, das unterhalb des ersten Vorlauftemperaturniveaus liegt, eingerichtet ist, und wobei in den ersten Kühlkreislauf ein Wärmepumpenkreislauf eingebunden ist, der dafür eingerichtet ist, Wärme auf ein Wärmeexportmedium zu übertragen.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Zeichnungen

Ausführungsformen von hier vorgeschlagenen Lösungen werden nachfolgend rein beispielhaft unter Bezugnahme auf die beigefügte Zeichnung beschrieben, wobei
Figur 1 eine Anlage zur Bereitstellung einer Kohlendioxidfraktion veranschaulicht;
Figur 2 eine Anlage zur Kohlendioxidverflüssigung veranschaulicht;
Figur 3 Aspekte von vorgeschlagenen Ausgestaltungen veranschaulicht;
Figur 4 einen Wärmepumpenkreislauf veranschaulicht; und
Figur 5 einen Wärmepumpenkreislauf veranschaulicht.

### Ausführungsformen

Die nachfolgend beschriebenen Ausführungsformen und Ausgestaltungen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale vorgeschlagener Verfahren und Vorrichtungen nicht abschließend und/oder beschränkend betrachtet werden.

Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Ansprüche oder als Beschränkungen von Äquivalenten hierzu zu betrachten sind, und dass andere Ausführungsformen verwendet und Änderungen vorgenommen werden können, ohne vom Umfang der Ansprüche abzuweichen.

Unterschiedliche Ausführungsformen können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus können andere Ausgestaltungen umfasst sein, die gegenwärtig nicht beansprucht sind, die aber in Zukunft beansprucht werden könnten, insbesondere wenn sie vom Umfang der unabhängigen Ansprüche umfasst sind.

Erläuterungen, die sich auf Vorrichtungen, Apparate, Anordnungen, Systeme usw. gemäß vorgeschlagenen Ausführungsformen beziehen, können auch für Verfahren, Prozesse, Methoden usw. gemäß anderen Ausführungsformen gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die vorstehenden und nachfolgenden Erläuterungen und Definitionen können für alle oder einen Teil der hier vorgestellten Ausgestaltungen gelten, und die Erläuterung bestimmter Aspekte im Zusammenhang mit nur einem Teil oder einer der Ausgestaltungen soll keineswegs dahingehend verstanden werden, dass diese Aspekte nicht auch mit anderen oder allen Ausgestaltungen, soweit technisch möglich und sinnvoll, verwirklicht sein können.

Flüssige und gasförmige Stoffströme, Gasgemische oder dergleichen können im hier verwendeten Sprachgebrauch "reich" oder "arm" an einer oder mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 10%, 5%, 1%, 0,1% oder 0,01% auf molarer, Gewichts- oder Volumenbasis stehen kann.

Flüssige und gasförmige Stoffströme, Gasgemische oder dergleichen können im hier verwendeten Sprachgebrauch ferner angereichert oder abgereichert an einer oder mehreren Komponenten sein, wobei sich diese Begriffe auf einen Gehalt in einem anderen Stoffstrom beziehen, unter Verwendung dessen der Stoffstrom gebildet wurde. Ein betrachteter Stoffstrom ist dabei "angereichert", wenn er zumindest den 2-fachen, 5-fachen, 10-fachen, 100-fachen oder 1.000-fachen Gehalt der bezeichneten Komponente(n) aufweist, und "abgereichert", wenn er höchstens den 0,5-fachen, 0,1-fachen, 0,01-fachen oder 0,001-fachen Gehalt der bezeichneten Komponente(n) aufweist, jeweils in Bezug auf den Stoffstrom, unter Verwendung dessen der betrachtete Stoffstrom gebildet wurde.

Sämtliche hier verwendeten Prozentangaben können sich auf Mol-, Mengen- oder Volumenanteile beziehen. Druckangaben in bar sind, soweit nicht anders erläutert, insbesondere als Absolutdrücke zu verstehen.

Die Konjunktion "und/oder" soll, wenn in einer Aufzählung vor dem letzten Begriff der Aufzählung verwendet, so verstanden werden, dass alle in der Aufzählung zuvor und danach genannten Begriffe beliebig miteinander kombiniert werden können. Mit anderen Worten ist mit "A, B und/oder C" "A und/oder B und/oder C" oder "wenigstens eines der Elemente A, B und C in beliebiger Kombination" gemeint.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, der mittels eines Verfahrens wie Kondensation, Verdampfung, Sieden, Destillieren, Rektifizieren, Absorbieren, Adsorbieren, Flashen, Membrantrennen, Abscheiden oder dergleichen gebildet wird oder bei einem entsprechenden Schritt als Rest verbleibt. Ein "Teil" kann auch nach einer Kombination beliebiger der vorstehend benannten Schritte vorliegen, beispielsweise nach trenntechnischer Bearbeitung abgezweigten Anteils.

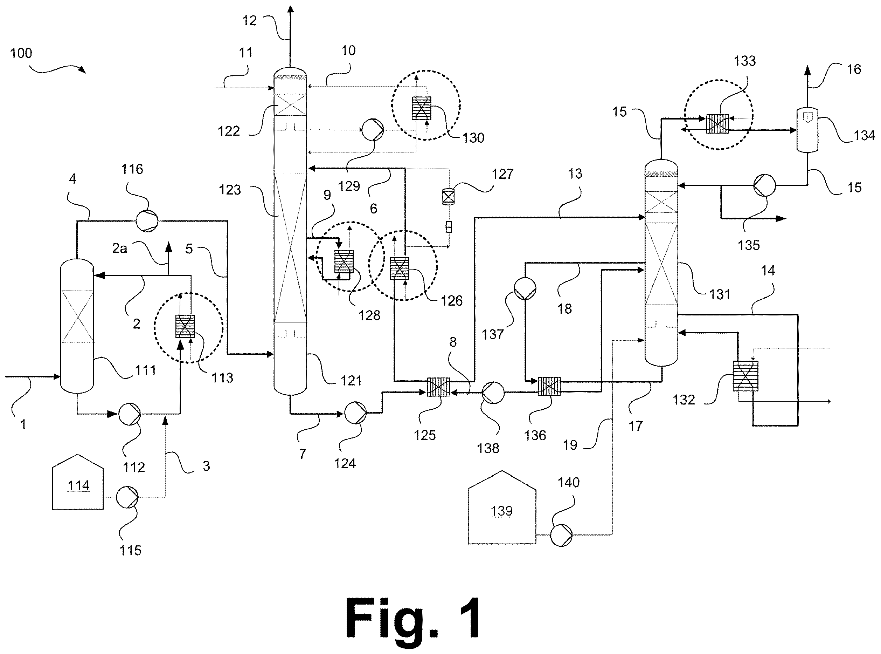

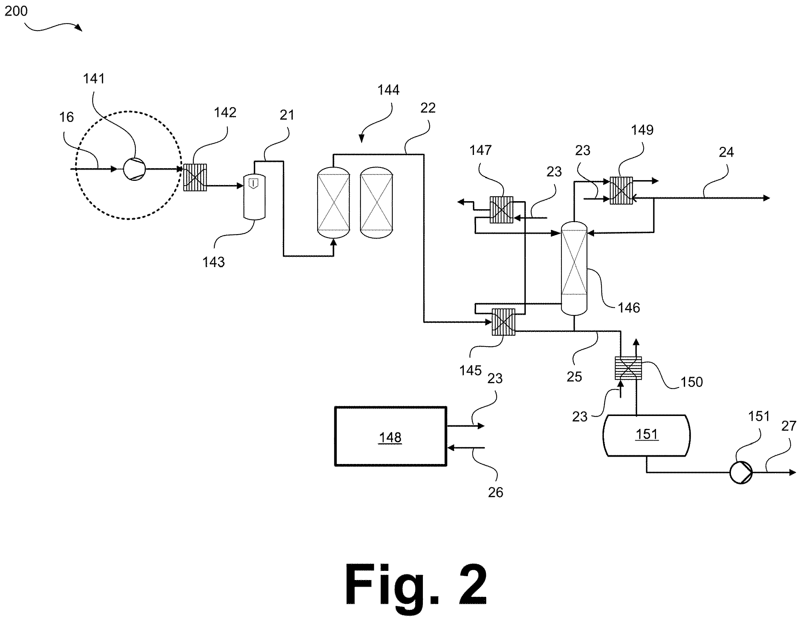

In Figur 1 ist eine Anlage zur Abscheidung von Kohlendioxid aus einem Rauchgas veranschaulicht und insgesamt mit 100 bezeichnet. Die Anlage 100 kann auch eine Anlage bzw. einen Anlagenteil umfassen, wie sie bzw. er in Figur 2 veranschaulicht und dort mit 200 bezeichnet ist.

Das mit 1 bezeichnete Rauchgas wird dabei einem Direktkontaktkühler 111 zugeführt, der mit einem Wasserumlauf betrieben wird. Dem Wasser des Wasserumlaufs kann bei Bedarf optional eine wässrige Natriumhydroxidlösung eines Stroms 3 zudosiert werden.. Der Waschwasserumlauf wird unter Verwendung einer Pumpe 112 aus einem Sumpf des Direktkontaktkühlers 111 abgezogen, mittels eines Wärmeübertragers, der hier der eindeutigen Bezugnahme halber als Waschwasserkühler 113 bezeichnet wird, gekühlt, und am Kopf in den Direktkontaktkühler 111 zurückgespeist. Beim Kühlen des Rauchgases 1 fällt ein Kondensat 2a an, welches aus der Anlage ausgeschleust werden muß. Enthält das Rauchgas 1 saure Komponenten wie Schwefeldioxid, Schwefeltrioxid, Chlorwasserstoff oder Fluorwasserstoff kann Natriumhydroxidlösung mittels einer Pumpe 115 aus einem Tank 114 zudosiert werden.

Neben seiner Funktion zur Kühlung des Rauchgases 1 wird durch den Direktkontaktkühler 111 auch Schwefeldioxid aus dem Rauchgas 1 entfernt. Hierdurch kann der Waschmittelverbrauch in der nachfolgenden Aminanlage reduziert und Korrosion vermieden werden. Falls erforderlich, kann ein zusätzliches Modul zur Entfernung von Feinpartikeln und/oder Aerosolen in den Direktkontaktkühler 111 integriert oder separat zu dem Direktkontaktkühler 111 bereitgestellt werden.

In dem Direktkontaktkühler 111 gekühltes Rauchgas eines Stroms 4 wird mittels eines Rauchgasgebläses 116 unter Druck gesetzt, um den Druckabfall in den vor- und nachgeschalteten Apparaten zu überwinden. Das gekühlte und entsprechend druckbeaufschlagte Rauchgas in einem Strom 5 wird in einen unteren Bereich einer Absorptionskolonne 121 eingespeist, die im dargestellten Beispiel eine Wasserwaschzone 122 und eine Absorptionszone 123 aufweist. Zwischen der Wasserwaschzone 122 und der Absorptionszone 123 sowie zwischen der Absorptionszone 123 und dem Einspeisebereich in die Absorptionskolonne 121 sind jeweils Flüssigkeitsstauböden vorgesehen, die der Übersichtlichkeit halber nicht gesondert bezeichnet sind. Die Wasserwaschzone 122 und die Absorptionszone 123 weisen jeweils Stoffaustauschstrukturen auf, die in beliebiger, aus der Trenntechnik bekannter Weise ausgebildet sein können.

Oberhalb der Absorptionszone 123 wird ein Strom 6 eines aminhaltigen Absorptionsmittels in die Absorptionskolonne 121 eingespeist, der in der Absorptionszone 123 verteilt wird, nach unten abfließt, dabei mit dem Rauchgas 5 in Kontakt kommt, und aus dem Rauchgas 5 Kohlendioxid aufnimmt. Aus dem Sumpf der Absorptionskolonne 121 wird mit Kohlendioxid beladenes Absorptionsmittel in Form eines Stroms 7 mittels einer Pumpe 124 abgezogen, in einem Wärmeübertrager, der hier der eindeutigen Bezugnahme als erster Absorptionsmittelwärmeübertrager 125 bezeichnet wird, gegen einen Strom 8 regenerierten Absorptionsmittels erwärmt, und in eine Regenerierkolonne 131 eingespeist. Das regenerierte Absorptionsmittel des Stroms 8 wird in einem zweiten Absorptionsmittelwärmeübertrager 126 abgekühlt und zur Bereitstellung des bereits erwähnten Stroms 6 verwendet. Ein Seitenstrom kann dabei durch eine Reinigungseinheit 127 geführt werden, mittels derer unerwünschte Komponenten aus dem Absorptionsmittel entfernt werden können.

Aufgrund der Absorptionsenthalpie steigt die Temperatur in der Absorptionszone 123 in der Absorptionskolonne 121 an, was ohne Gegenmaßnahmen die Prozesseffizienz insgesamt senken würde. Zwischen den Absorptionsbetten in der Absorptionszone 123 ist daher ein schwerkraftgetriebener Zwischenkühler eingebunden, um die allgemeine Leistung der Anlage zu erhöhen. Dieser wird hier als dritter Absorptionsmittelwärmeübertrager 128 bezeichnet. Er kühlt einen Strom 9 teilbeladenen Absorptionsmittels aus der Absorptionszone 123.

Die Wasserwaschzone 122 wird mit Waschwasser eines Stroms 10 betrieben, das mittels einer Pumpe 129 aus von dem Flüssigkeitsstauboden unterhalb der Wasserwaschzone 122 abgezogen, zu einem ersten Teil einem Waschwasserwärmeübertrager 130 abgekühlt und auf den die Wasserwaschzone 122 zurückgeführt und zu einem zweiten Teil in die Absorptionszone 123 eingespeist wird.

Fehlwasser kann unter Verwendung eines Makeupstroms 11 ausgeglichen werden. Vom Kopf der Absorptionskolonne 121 wird ein Restrauchgasstrom 12 abgezogen und beispielsweise an die Atmosphäre abgegeben.

Der Strom 7 der beladenen Absorptionsflüssigkeit wird, nach der Erwärmung in dem ersten Absorptionsmittelwärmeübertrager 125 mit 13 bezeichnet, in die Regenerierkolonne 131 eingespeist, die einen dampfbeheizten Reboiler 132 aufweist, in der ein flüssiger Strom 14 aus der Regenerierkolonne 131 verdampft wird, welcher anschließend in verdampftem Zustand in die Regenerierkolonne 131 zurückgeführt wird. Ein gasförmiger Strom 15 vom Kopf der Regenerierkolonne 131 wird in einem Kopfkondensator 133 abgekühlt und in einen Separator 134 eingespeist. Ein gasförmig verbleibender Anteil wird in Form eines Stroms 16 als Kohlendioxidprodukt ausgeführt, ein Kondensat als Strom 16 unter Verwendung einer Pumpe 135 teilweise auf die Regenerierkolonne 131 zurückgeführt.

Aus dem Sumpf der Regenerierkolonne 131 wird regeneriertes Absorptionsmittel in Form eines Stroms 17 abgezogen und in einem vierten Absorptionsmittelwärmeübertrager 136 abgekühlt. In dem vierten Absorptionsmittelwärmeübertrager 136 wird ein Strom 18 teilregenerierten Absorptionsmittels aus der Regenerierkolonne 131 erwärmt, der mittels einer Pumpe 137 gefördert wird. Das in dem vierten Absorptionsmittelwärmeübertrager 136 abgekühlte Absorptionsmittel, d.h. der abgekühlte Strom 17, wird mittels einer Pumpe 138 zu dem ersten Absorptionsmittelwärmeübertrager 125 befördert. Mindermengen an Absorptionsmittel können unter Verwendung eines mittels einer Pumpe 140 aus einem Tank 139 abgezogenen Makeupstroms 19 ausgeglichen werden.

Wie in Figur 1 jeweils mit gestrichelten Kreisen veranschaulicht, sind an unterschiedlichen Positionen, nämlich mittels des Waschwasserkühler 113, des zweiten Absorptionsmittelwärmeübertragers 126, des dritten Absorptionsmittelwärmeübertragers 128, des Waschwasserwärmeübertragers 130 und des Kopfkondensators 133, jeweils Kühlaufgaben zu realisieren, d.h. Wärme ist aus den entsprechend zu kühlenden Strömen 2, 8, 9, 10 und 15 abzuführen. Im Gegensatz zu dem ersten Absorptionsmittelwärmeübertrager 125 und dem vierten Absorptionsmittelwärmeübertrager 136 kommen in den genannten Wärmeübertragern separate Kühlmedien zum Einsatz.

In Figur 2 ist eine Anlage bzw. ein Anlagenteil zur weiteren Bearbeitung von aus einem Rauchgas abgeschiedenem Kohlendioxid wie beispielsweise dem Strom 16 veranschaulicht und insgesamt mit 200 bezeichnet.

Das Kohlendioxid wird mittels eines Kohlendioxidverdichters 141 verdichtet und danach mittels eines ersten Kohlendioxidkühlers 142 gekühlt. Nach einer Abscheidung von Wasser in einer Abscheidetrommel 143 wird der verdichtete und abgekühlte Strom 21 einer Trocknung in einem adsorptiven Trockner 144 unterworfen. Der getrocknete Strom 22 wird mittels eines zweiten Kohlendioxidkühlers 145, der zugleich als Reboiler einer Kohlendioxidrektifikationskolonne 146 dient, und danach in mittels eines dritten Kohlendioxidkühlers 147, der mit einem Kältemittelstrom 23 aus einer Kältemitteleinheit 148 betrieben wird, weiter abgekühlt und in die Kohlendioxidrektifikationskolonne 146 eingespeist. Die Kohlendioxidrektifikationskolonne 146 wird mit einem Kopfkondensator 149 betrieben, der ebenfalls mit einem Kältemittelstrom 23 aus der Kältemitteleinheit 148 betrieben wird. Ein verbleibendes Restgas 24 wird aus der Anlage bzw. dem Anlagenteil 200 abgezogen.

Flüssiges Kohlendioxid eines Stroms 25 wird mittels eines vierten Kohlendioxidkühlers 150 unterkühlt, der ebenfalls mit einem Kältemittelstrom 23 aus der Kältemitteleinheit 148 betrieben wird. In die Kältemitteleinheit 148 rückgespeistes Kältemittel ist jeweils mit 26 angegeben. Das unterkühlte flüssige Kohlendioxid kann in einen Kohlendioxidtank 151 eingespeist werden, aus dem es mittels einer Pumpe 152 in Form eines Stroms 27 als Kohlendioxidprodukt entnommen werden kann.

Wie in Figur 2 mit einem gestrichelten Kreis veranschaulicht, ist in Anlage bzw. Anlageteil 200 in Form des Kohlendioxidverdichters 141 und des ersten Kohlendioxidkühlers 142 eine Wärmequelle bzw. entsprechender Kühlbedarf vorhanden, da das verdichtete Kohlendioxid des Stroms 16 sich aufgrund der Verdichtung in dem Kohlendioxidverdichters 141 erwärmt.

Generell kann in den in den Figuren 1 und 2 dargestellten Anlagen bzw. Anlagenteilen 100, 200 zusätzlich benötigte Energie (Fern-/Nahwärme, Regeneration des Waschmittels) durch die Integration von Wärmepumpen bereitgestellt werden. Die Wärme, die in einen entsprechenden Prozess insbesondere über den Reboiler 132 eingebracht wird, muss an unterschiedlichen Positionen in Form einer Kühlung wieder abgeführt werden, wie bereits oben anhand der in Figur 1 gestrichelt eingekreisten Komponenten erläutert. Eine weitere Kühlung ist in dem Kohlendioxidverdichter 141 und dem ersten Kohlendioxidkühler 142 in der in Figur 2 veranschaulichten Anlage bzw. dem Anlagenteil 200 vorhanden.

Zur Kühlung kann insbesondere Kühlwasser verwendet werden, was praktisch zur Verschwendung von Wärmeenergie führt. Das Hauptproblem bei der Nutzung solcher Wärmequellen sind jedoch deren relativ niedrige Temperaturniveaus, die die Wiederverwendung der Abwärme wirtschaftlich unattraktiv machen. Hier vorgeschlagene Ausgestaltungen umfassen eine neue Möglichkeit der Wärmerückgewinnung mit einer Wärmepumpe in wirtschaftlich attraktiver Weise.

Eine Wärmepumpe hat einen möglichst hohen Wirkungsgrad, wenn die Temperaturdifferenz zwischen Wärmequelle und Wärmesenke möglichst gering ist. Ziel ist es daher, die Temperatur der Wärmequelle möglichst hoch zu erhalten, da die Temperatur der Wärmesenke meist prozess- oder anwendungsbedingt feststeht.

Typische Temperaturen für die Wärmesenke sind für die Regeneration des Absorptionsmittel ca. 120 bis 150 °C und für die Bereitstellung von Wärme für ein Fern- bzw. Nahwärmenetz ca. 70 bis 130 °C. Als Wärmequellen stehen in dem hier vorgestellten Verfahren zur Reinigung/Kompression/Verflüssigung die erwähnten Kühlprozesse als Wärmequellen zur Verfügung.

Die Wärmequellen sind in der Anlage örtlich verteilt und werden normalerweise durch Kühlwasser, Meerwasser, Sekundärkreislaufwasser oder Luftkühler gekühlt bei möglichst minimalen Kühlbedingungen. Als Arbeitsmittel für die Wärmepumpe werden für diesen Anwendungsbereich Kohlenwasserstoffe oder auch Ammoniak verwendet. Diese Stoffe haben ein bestimmtes Gefährdungspotential (giftig, brennbar) und die weite örtliche Verteilung innerhalb der Anlage soll vermieden werden. Gleichzeitig soll die Temperatur der Wärmequelle so hoch wie möglich gehalten werden.

Daher wird in den vorliegend vorgeschlagenen Ausgestaltungen, wie bereits erwähnt, ein separater Kühlkreislauf mit erhöhter Umlauftemperatur mit einem ungiftigen Medium (beispielsweise Wasser oder einem Wasser/Glykolgemisch) vorgeschlagen, der die Energie der zu integrierenden Wärmequellen bei maximal möglicher Umlauftemperatur sammelt und an eine Wärmepumpe abgibt.

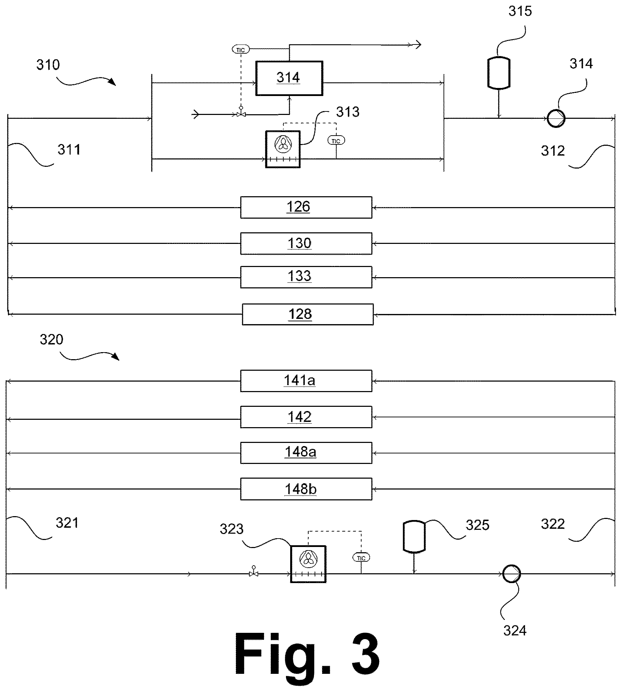

In Figur 3 sind Aspekte entsprechender Ausgestaltungen veranschaulicht, wobei im oberen Teil der Figur 3, mit 310 bezeichnet, der vorgeschlagene separate Kühlkreislauf mit erhöhter Umlauftemperatur, hier auch als erster Kühlkreislauf bezeichnet, und im unteren Teil der Figur 3, mit 320 bezeichnet, ein weiterer Kühlkreislauf mit geringerer Umlauftemperatur, hier auch als zweiter Kühlkreislauf bezeichnet, dargestellt ist. Der erste Kühlkreislauf 310 wird auf höherer Umlauftemperatur betrieben, wodurch der Energiebedarf der Wärmepumpe verringert werden kann.

In dem ersten Kühlkreislauf 311 finden sich ein erster Header 311 und ein zweiter Header 312, zwischen denen insbesondere der zweite Absorptionsmittelwärmeübertrager 126, der der dritte Absorptionsmittelwärmeübertrager 128, der Waschwasserwärmeübertrager 130 und der Kopfkondensator 133 (siehe Figur 1, hier identisch bezeichnet) eingebunden sind. Über den ersten Header 311 gesammeltes, erwärmtes Kühlwasser wird auf einen Kühlwasserkühler 313 und einer Wärmepumpe 314 verteilt, wobei der Kühlwasserkühler 313 mittels einer Temperaturregelung TIC betrieben wird, und mittels einer Kühlwasserpumpe 314 dem zweiten Header 312 zurückgeführt. Ein Expansionsbehälter 315 dient zum Ausgleich von Volumenänderungen. Mittels der Wärmepumpe kann ein zur Verteilung in einem Warmwassernetzwerk bestimmter Wasserstrom auf Grundlage einer Temperaturregelung TIC erwärmt werden.

In dem zweiten Kühlkreislauf 320 finden sich ein erster Header 321 und ein zweiter Header 322, zwischen denen insbesondere ein dem Kohlendioxidverdichter 141 zugeordneter Wärmeübertrager 141a, der der erste Kohlendioxidwärmeübertrager 142 und in der Kältemitteleinheit 148 bereitgestellte Wärmeübertrager 148a, 148b (siehe zur Anordnung insbesondere Figur 2) eingebunden sind. Über den zweiten Header 322 gesammeltes, erwärmtes Kühlwasser wird einem Kühlwasserkühler 323 zugeführt, der mittels einer Temperaturregelung TIC betrieben wird, und mittels einer Kühlwasserpumpe 324 zu dem ersten Header zurückgeführt. Ein Expansionsbehälter 325 dient zum Ausgleich von Volumenänderungen.

Wie bereits mit anderen Worten erläutert, werden in herkömmlichen Verfahren alle zu kühlenden Ausrüstungen (Wärmeübertrager, Zwischenkühler von Verdichtern und dergleichen) in einen gemeinsamen Kühlkreislauf betrieben. Dieser wird dabei bei minimal möglichen Vorlauftemperaturen betrieben, um eine möglichst hohe Effizienz zu erzielen. Im vorliegenden Prozess, wie er insbesondere zu den Figuren 1 und 2 erläutert wurde, gibt es jedoch bestimmte Wärmequellen, die nicht so tief heruntergekühlt werden müssen (wie z.B. alle Kühler im Absorptionsmittelkreislauf, der der Absorptionskolonne 121 zugeordnet sind) und andererseits Wärmequellen die möglichst tief heruntergekühlt werden müssen (z.B. Zwischenkühler von Verdichtern zur Verringerung des Energiebedarfs).

Für den effizienten Betrieb der Wärmepumpe 314 wird der Kühlkreislauf daher, wie hier vorgeschlagen, in den ersten Kühlmittelkreislauf 310 mit erhöhter Umlauftemperatur und Wärmepumpenintegration und den zweiten Kühlmittelkreislauf 320 mit geringer Umlauftemperatur getrennt (dessen Kreislauftemperaturen einem konventionellen Kühlkreislauf entsprechen können). Durch die höhere Umlauftemperatur im ersten Kühlmittelkreislauf 310 kann die Wärmepumpe 314 effizienter arbeiten. Nochmals zusammengefasst ergeben sich durch die vorgeschlagenen Maßnahmen eine bessere Effizienz der Wärmepumpe 314 bzw. ein geringerer Stromverbrauch und damit geringere Betriebskosten als in konventionellen Ausgestaltungen.

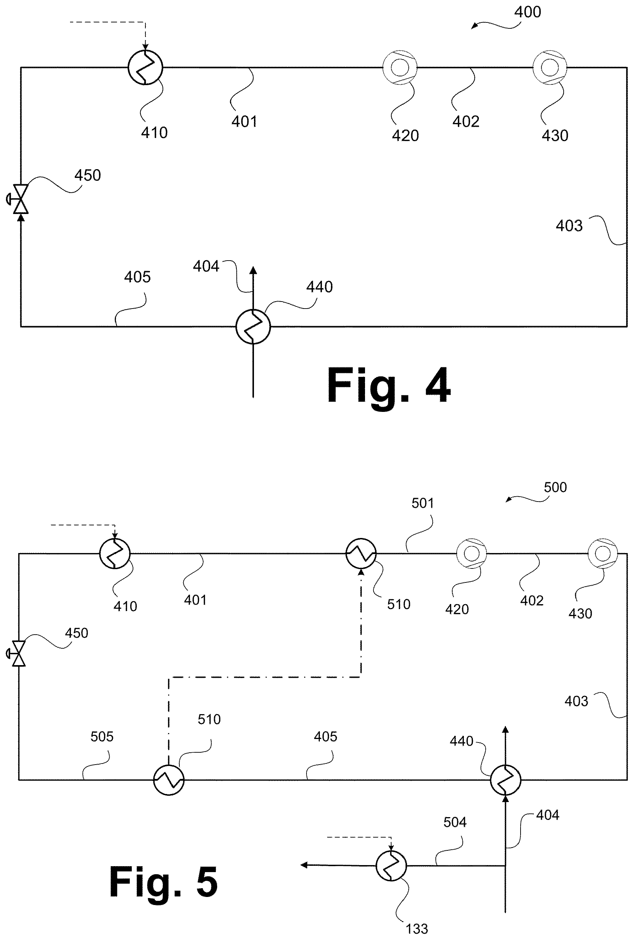

In Figur 4 ist ein Wärmepumpenkreislauf 400 veranschaulicht, der beispielsweise in dem ersten Kältemittelkreislauf 310 gemäß Figur 1 verwendet werden kann und beispielsweise zur Fernwärmeversorgung aus einer Abfallverbrennung dienen kann. Die Vorlauftemperatur beträgt dabei beispielsweise ca. 90 °C, als Arbeitsmedium kann beispielsweise Isopentan dienen. Bei einer konventionellen Einbindung in ein Kühlwassersystem mit einer Kühlwasservorlauftemperatur von 30 °C ergibt sich eine Leistungszahl COP von ca. 2,8, wohingegen sich in einer vorgeschlagenen Ausgestaltung mit einer Kühlwasservorlauftemperatur von 42 °C eine Leistungszahl von ca. 3,5, und damit eine deutlich bessere Energieeffizienz ergibt.

Die Wärmepumpenanordnung gemäß Figur 4 umfasst einen Verdampfer 410, zwei Verdichtereinheiten 420 und 430, die in einer gemeinsamen Maschine gekoppelt sein können, einen Kondensator 440, und ein Drosselventil 450. Stromab des Verdampfers 410, der mit einem Wärmeeintrag entsprechend beispielsweise ca. 10 MW betrieben wird, wie mit einem gestrichelten Pfeil bezeichnet, liegt das Arbeitsmedium, an dieser Stelle mit 401 bezeichnet, bei beispielsweise ca. 1,4 bar und auf einer Temperatur von beispielsweise ca. 38 °C vor. Die Verdichtung erfolgt mit einer Verdichterleistung von beispielsweise ca. 4.044 kW, wobei die erste Verdichtereinheit 420 und die zweite Verdichtereinheit 430 jeweils mit einem Wirkungsgrad η von 75% betrieben werden. Zwischen der ersten Verdichtereinheit 420 und der zweiten Verdichtereinheit 430 liegt das Arbeitsmedium, an dieser Stelle mit 402 bezeichnet, auf einem Druck von beispielsweise ca. 3,3 bar vor. Stromab der zweiten Verdichtereinheit liegt das Arbeitsmedium, an dieser Stelle mit 403 bezeichnet, auf einem Druck von beispielsweise ca. 6,5 bar und einer Temperatur mit beispielsweise ca. 96 °C vor. Seine Menge beträgt beispielsweise ca. 188 t/h. Der Kondensator 440 wird mit Prozesswasser 404 betrieben, das stromauf des Kondensators 440 mit einer Temperatur von beispielsweise ca. 53 °C und stromab hiervon mit einer Temperatur von beispielsweise ca. 90 °C vorliegt. Das Arbeitsmedium, an dieser Stelle mit 405 bezeichnet, liegt stromab des Kondensators 440 auf einer Temperatur von beispielsweise ca. 95 °C vor.

Hier vorgeschlagene Ausgestaltungen können auch eine modulare Einbindung der vorhandenen Wärmequellen je nach Bedarf umfassen. So können zuerst die Wärmequellen mit höherer Temperatur eingebunden werden und die Umlauftemperatur weiter erhöht werden. In den vorgeschlagenen Ausgestaltungen ergeben sich besondere Vorteile in Form einer Vereinfachung des Anlagendesigns. Es ist eine großflächige Verteilung des Arbeitsmediums einer Wärmepumpe 314 in der Anlage 100 bzw. 200 erforderlich. Die Installation der Wärmepumpe 314 kann über den vorgeschlagenen ersten Kühlmittelkreislauf 310 auf einem separaten Baufeld erfolgen. Beispielsweise kann eine explosionsgeschützt ausgebildete Zone auf diese Weise minimiert werden und betrifft somit nur einen kleinen Teil der Anlage.

Mit einem optimierten Wärmepumpenkreislauf 500, wie er in Figur 5 veranschaulicht ist, kann eine weitere Optimierung erzielt werden, wobei die bereits zu Figur 4 veranschaulichten Apparate mit denselben Bezugszeichen veranschaulicht sind. In der in Figur 5 veranschaulichten Ausgestaltung ist ein zusätzlicher Wärmeübertrager 510 zum Unterkühlen des Arbeitsmediums (an zwei Positionen veranschaulicht, aber typischerweise in einem gemeinsamen Apparat integriert, wobei ein Wärmefluss mit einem strichpunktierten Pfeil veranschaulicht ist) vorgesehen, sowie der Kopfkondensator 133 eingebunden, dessen Betriebstemperatur höher als die Fernwärmevorlauftemperatur ist. Auf diese Weise kann die Leistungszahl auf 5,2 (49% Erhöhung gegenüber konventionellen Anordnungen) verbessert werden, wobei die Leistungszahl ohne die Einbindung des Kopfkondensators bei 4,3 (23% Erhöhung) liegt. Anlagenteile, die eine verbesserte Kühlung benötigen (z.B. Verdichterzwischenkühler, Kältemittelkondensator der Verflüssigungsanlage) können ganzjährig mit dem normalen Kühlkreislauf optimal gekühlt werden. Es ergeben sich keine Effizienzeinbußen.

In der Ausgestaltung gemäß Figur 5 wird der Verdampfer 410 mit einem Wärmeeintrag von beispielsweise ca. 7,8 MW betrieben, wie mit einem gestrichelten Pfeil bezeichnet. Stromab liegt das Arbeitsmedium, an dieser Stelle mit 401 bezeichnet, bei beispielsweise ca. 1,4 bar und auf einer Temperatur von beispielsweise ca. 38 °C vor. Eine weitere Temperaturerhöhung erfolgt in dem Wärmeübertrager 510 auf eine Temperatur von beispielsweise ca. 90 °C, die an einer hier mit 501 bezeichneten Position vorliegt. Die Verdichtung erfolgt mit einer Verdichterleistung von beispielsweise ca. 2.371 kW, wobei die erste Verdichtereinheit 420 und die zweite Verdichtereinheit 430 jeweils mit einem Wirkungsgrad η von 75% betrieben werden. Zwischen der ersten Verdichtereinheit 420 und der zweiten Verdichtereinheit 430 liegt das Arbeitsmedium, an dieser Stelle mit 402 bezeichnet, auf einem Druck von beispielsweise ca. 3,3 bar vor. Stromab der zweiten Verdichtereinheit 430 liegt das Arbeitsmedium, an dieser Stelle mit 403 bezeichnet, auf einem Druck von beispielsweise ca. 6,5 bar und einer Temperatur mit beispielsweise ca. 138 °C vor. Seine Menge beträgt beispielsweise ca. 97 t/h. Der Kondensator 440 wird mit Prozesswasser 404 betrieben, das stromauf des Kondensators 440 mit einer Temperatur von beispielsweise ca. 53 °C und stromab hiervon mit einer Temperatur von beispielsweise ca. 90 °C vorliegt. Ein Seitenstrom von Prozesswasser, hier mit 504 bezeichnet, kann in dem Kopfkondensator 133 mit einer eingebrachten Wärmemenge von beispielsweise ca. 2.200 kW auf eine Temperatur von beispielsweise ca. 90 °C gebracht werden. Der Wärmeübertrager 510 überträgt eine Wärmemenge entsprechend beispielsweise ca. 2.790 kW und (unter)kühlt das Arbeitsmedium, das an einer entsprechenden Position stromab des Wärmeübertragers 510 mit 505 bezeichnet ist, auf beispielsweise ca. 55 °C

## Patentansprüche

1. Verfahren zur Bereitstellung einer Kohlendioxidfraktion unter Verwendung eines Kohlendioxid enthaltenden, gasförmigen Einsatzgemischs (1), das umfasst:
absorptives Behandeln des Einsatzgemischs (1) oder eines Teils hiervon unter Erhalt eines mit Kohlendioxid beladenen Absorptionsmittels (7) und eines gegenüber dem Einsatzgemisch an Kohlendioxid abgereicherten Restgemischs (12); und
regeneratives Behandeln des beladenen Absorptionsmittels (7) oder eines Teils hiervon unter Erhalt eines regenerierten Absorptionsmittels (8) und der Kohlendioxidfraktion oder einer Vorläuferfraktion (16) hiervon,
wobei das Verfahren die Verwendung einer ersten Gruppe von Wärmeübertragern (126, 128, 130, 133), die unter Verwendung eines ersten Kühlkreislaufs (310) betrieben werden, und einer zweiten Gruppe von Wärmeübertragern (141a, 142, 148a, 148b), die unter Verwendung eines zweiten Kühlkreislaufs (320) betrieben werden, umfasst,
wobei der erste Kühlkreislauf (310) auf einem ersten Vorlauftemperaturniveau betrieben wird und der zweite Kühlkreislauf (320) auf einem zweiten Vorlauftemperaturniveau, das unterhalb des ersten Vorlauftemperaturniveaus liegt betrieben wird, und
wobei in den ersten Kühlkreislauf (310) ein Wärmepumpenkreislauf (400, 500) eingebunden ist, mittels dessen Wärme auf ein Wärmeexportmedium übertragen wird.

2. Verfahren nach Anspruch 1, bei dem die erste Gruppe von Wärmeübertragern (126, 128, 130, 133) einen oder mehrere Absorptionsmittelwärmeübertrager (126, 128), der oder die zum Kühlen eines Stroms des regenerierten Absorptionsmittels (8) verwendet wird oder werden, einen Waschwasserwärmeübertrager (130), der zum Kühlen von Waschwasser, das in bei dem absorptiven Behandeln verwendet wird, und/oder einen Kopfkondensator (133) einer für das regenerative Behandeln verwendeten Regenerationskolonne (131) umfasst.

3. Verfahren nach Anspruch 1 oder 2, bei dem mittels des regenerativen Behandelns die Vorläuferfraktion der Kohlendioxidfraktion gebildet wird, wobei die Vorläuferfraktion oder ein Teil hiervon einer Aufbereitung zu der Kohlendioxidfraktion unterworfen wird, wobei die Aufbereitung eine Verdichtung (141), Verflüssigung und Rektifikation umfasst und unter Verwendung von Wärmeübertragern (141a, 142, 148a, 148b) durchgeführt wird, die Teil der zweiten Gruppe von Wärmeübertragern (141a, 142, 148a, 148b) sind.

4. Verfahren nach Anspruch 3, bei dem die Verflüssigung und Rektifikation unter Verwendung einer Kältemitteleinheit (148) durchgeführt wird, die unter Verwendung von Wärmeübertragern (148a, 148b) betrieben wird, die Teil der zweiten Gruppe von Wärmeübertragern (141a, 142, 148a, 148b) sind.

5. Verfahren nach Anspruch 3 oder 4, bei dem die Verdichtung unter Verwendung eines Kohlendioxidverdichters (141) mit einem oder mehreren Zwischenkühlern und/oder Nachkühlern durchgeführt wird, die Teil der zweiten Gruppe von Wärmeübertragern (141a, 142) sind.

6. Verfahren nach einem der vorstehenden Ansprüche, bei dem das zweite Vorlauftemperaturniveau bei 25 bis 35 °C liegt und bei dem das erste Vorlauftemperaturniveau bei 35 bis 45 °C liegt.

7. Verfahren nach einem der vorstehenden Ansprüche, bei dem der Wärmepumpenkreislauf (500) unter Verwendung eines Wärmeübertragers (510) betrieben wird, der ein in dem Wärmepumpenkreislauf (500) verdichtetes und kondensiertes Arbeitsmedium unterkühlt und ein in dem Wärmepumpenkreislauf (500) entspanntes und verdampftes Arbeitsmedium überhitzt.

8. Verfahren nach Anspruch 7, bei dem in den Wärmepumpenkreislauf (500) ein Kopfkondensator (133) einer für das regenerative Behandeln verwendeten Regenerationskolonne (131) eingebunden ist.

9. Verfahren nach einem der vorstehenden Ansprüche, bei dem der erste Kühlkreislauf (310) mit glykolhaltigem Kühlwasser betrieben wird.

10. Verfahren nach einem der vorstehenden Ansprüche, bei dem das Einsatzgemisch (1) ein Rauchgas ist.

11. Verfahren nach einem der vorstehenden Ansprüche, das das Direktkontaktkühlen des Einsatzgemischs (1) oder eines Teils hiervon umfasst.

12. Verfahren nach Anspruch 11, bei dem das Direktkontaktkühlen unter Verwendung von Waschwasser erfolgt, welches unter Verwendung eines Wärmeübertragers (113) gekühlt wird, der Teil der ersten Gruppe von Wärmeübertragern (126, 130, 133) oder der zweiten Gruppe von Wärmeübertragern (128, 141a, 142, 148a, 148b) ist.

13. Verfahren nach einem der vorstehenden Ansprüche, bei dem das Wärmeexportmedium Fernwärmewasser und/oder Niederdruckdampf ist.

14. Anlage (100, 200) zur Bereitstellung einer Kohlendioxidfraktion unter Verwendung eines Kohlendioxid enthaltenden, gasförmigen Einsatzgemischs (1), die zur Durchführung der folgenden Schritte eingerichtet ist:
absorptives Behandeln des Einsatzgemischs (1) oder eines Teils hiervon unter Erhalt eines mit Kohlendioxid beladenen Absorptionsmittels (7) und eines gegenüber dem Einsatzgemisch an Kohlendioxid abgereicherten Restgemischs (12); und
regeneratives Behandeln des beladenen Absorptionsmittels (7) oder eines Teils hiervon unter Erhalt eines regenerierten Absorptionsmittels (8) und der Kohlendioxidfraktion oder einer Vorläuferfraktion (16) hiervon,
wobei die Anlage (100, 200) eine erste Gruppe von Wärmeübertragern (126, 128, 130, 133), die zum Betrieb unter Verwendung eines ersten Kühlkreislaufs (310) eingerichtet sind, und eine zweite Gruppe von Wärmeübertragern (141a, 142, 148a, 148b), die zum Betrieb unter Verwendung eines zweiten Kühlkreislaufs (320) eingerichtet sind, aufweist,
wobei der erste Kühlkreislauf (310) für einen Betrieb auf einem ersten Vorlauftemperaturniveau eingerichtet ist und der zweite Kühlkreislauf (320) auf einem zweiten Vorlauftemperaturniveau, das unterhalb des ersten Vorlauftemperaturniveaus liegt, eingerichtet ist, und
wobei in den ersten Kühlkreislauf (310) ein Wärmepumpenkreislauf (400, 500) eingebunden ist, der dafür eingerichtet ist, Wärme auf ein Wärmeexportmedium zu übertragen.

15. Anlage (100, 200) nach Anspruch 14, die zur Durchführung eines Verfahrens nach einem der Ansprüche 1 bis 13 eingerichtet ist.
